# FASCICULE DE BREVET EUROPEEN

(11) **EP 0 446 827 B1**
(45) Date de publication et mention de la délivrance du brevet: **24.04.1996**
(21) Numéro de dépôt: 91103673.9
(22) Date de dépôt: 11.03.1991
(51) Int. Cl.: H04Q 11/04, H04L 29/10

(54) **Installation terminale d'abonné pour réseau asynchrone**
Terminaleinrichtung für asynchrones Netzwerk
Terminal installation for asynchronous network

(30) Priorité: 12.03.1990 FR 9003113
(43) Date de publication de la demande: 18.09.1991
(73) Titulaire: ALCATEL CIT, F-75008 Paris (FR)
(72) Inventeur: Onno, Guy, F-22700 St Quay Perros (FR)
(74) Mandataire: Weinmiller, Jürgen

(56) Documents cités:
- EP-A- 0 355 797
- EP-A- 0 413 488
- DE-A- 3 436 722
- Global Telecommunications Conference 1987, Session 37, Paper 7, vol. 3, 15 novembre 1987, Tokyo, JP pages 1 - 4; A.Brosio et al.: "A modular approach to broadband ISDN over optical fibres"
- INTERNATIONAL SWITCHING SYMPOSIUM 1990, Session A10, Paper #2 vol. 6, 28 mai 1990, Stockholm, SE pages 93 - 97; W.Gerfen: "The Interim Broadband Network of Deutsche Bundespost"

## Description

### Installation terminale d'abonné pour réseau asynchrone

L'invention concerne une installation terminale d'abonné. Une installation terminale d'abonné permet, d'une manière générale d'interconnecter entre eux des terminaux d'un usager, et de relier ces terminaux à un réseau public.

Les installations terminales d'abonnés ont été, jusqu'à présent, le plus souvent construites sur la base d'un mode de transfert synchrone dans lequel l'information à échanger occupe un canal de débit fixe, 54 kbit/s par exemple. Le mode de transfert synchrone est utilisé dans les réseaux numériques à intégration de services à bande étroite, RNIS-BE.

Le mode de transfert asynchrone, MTA, est pressenti pour la mise en oeuvre des réseaux à intégration de services large bande, BISDN, permettant, outre le continuité des services du RNIS-BE, l'avènement de nouveaux services nécessitant des débits à des valeurs plus élevées et multiples. Ce mode de transfert asynchrone présente la particularité de pouvoir acheminer n'importe quel débit, pourvu qu'il reste inférieur au débit maximal du conduit utilisé pour la transmission.

Dans le mode de transfert asynchrone l'information est transportée sous la forme de cellules de longueur fixe. Ces cellules comprennent un en-tête de longueur fixe et un champ d'information également de longueur fixe. L'information appartenant à une communication particulière est identifiée grâce à un numéro de circuit virtuel contenu dans l'en-tête de la cellule. Ce mode de multiplexage de l'information permet l'acheminement de débits quelconques sans autre structure de trame de transmission que celle de la cellule. Dans tout ce qui suit on a supposé, uniquement à titre d'exemple, que l'en-tête avait une longueur de 4 octets et que le champ d'information avait une longueur de 32 octets, soit au total 36 octets de longueur pour une cellule; bien entendu l'en-tête et le champ d'information peuvent avoir des longueurs différentes de celles indiquées ci-dessus.

Le document EP-A-0 355 797 décrit un central ATM qui assure des fonctions propres à un central ATM, à savoir l'insertion et la suppression d'informations de routage en tête de chaque cellule, pour assurer l'interface avec plusieurs autres centraux. Il comporte des interfaces de ligne d'abonné qui ne peuvent être raccordées chacune qu'à un seul terminal d'abonné, car elles ne font qu'une simple conversion électrique-optique. Une telle interface de ligne ne peut assurer la gestion du trafic interne d'une installation d'usager et l'accès au réseau public d'une pluralité de terminaux appartenant à une même installation d'usager.

Le document GLOBAL TELECOMMUNICATIONS CONFERENCE 1987, Session 37, Paper 7, vol. 3, 15 novembre 1987, Tokyo, JP ; pages 1-4 ; A. BROSIO et al. : "A modular approach to broadband ISDN over optical fibres" ; décrit une terminaison numérique de réseau qui comporte deux convertisseurs optiques/électriques entre lesquels des circuits d'extraction-insertion de cellules extraient ou insèrent des affluents. Ils réalisent une insertion synchrone dans une trame. Ces circuits sont spécialisés en fonction de l'arrangement des affluents qui sont à multiplexer, de manière synchrone, dans une trame. Ils ne conviennent donc pas pour assurer la gestion du trafic interne d'une installation d'usager et l'accès au réseau public d'une pluralité de terminaux appartenant à une même installation d'usager.

Le but de l'invention est de réaliser une installation d'abonné, basée sur le mode de transfert asynchrone, permettant d'une part la continuité des services offerts par des terminaux synchrones raccordés à une installation existante, et d'autre part une ouverture vers de nouveaux services à des débits encore incomplètement identifiés.

Un autre but de l'invention est de réaliser une installation terminale d'abonné qui puisse évoluer afin de s'adapter aux besoins de l'usager.

L'invention a pour objet une installation terminale d'abonné pour réseau asynchrone dans lequel les informations sont organisées en cellules, comportant:
- une terminaison numérique de réseau reliée au réseau asynchrone ;
- une terminaison numérique d'abonné reliée par une interface optique asynchrone bidirectionnelle à la terminaison de réseau ;
- des terminaux reliés directement à ladite terminaison numérique d'abonné ;
- et des terminaux reliés chacun à ladite terminaison numérique d'abonné par un adaptateur de terminal;
caractérisé par le fait que la terminaison numérique d'abonné comprend :
- une matrice de commutation ;
- une pluralité de modules d'accès à cette matrice, ayant la même structure mais fonctionnant à des fréquences d'horloge différentes ; chaque module d'accès, ayant un premier port relié à la matrice de commutation et ayant un second port ; l'un des modules d'accès ayant un second port relié à la terminaison numérique de réseau par l'interface optique asynchrone bidirectionnelle, les autres modules d'accès ayant chacun un second port relié à un terminal ou à un adaptateur de terminal, par une interface optique asynchrone bidirectionnelle ; chaque module d'accès comportant des moyens pour adapter le débit de la matrice de commutation au débit des informations sur son second port;
- au moins un processeur relié aux modules d'accès ;
et par le fait que chaque interface optique asynchrone reliée à un module d'accès a un débit fonction de la terminaison numérique de réseau, ou du terminal, ou de l'adaptateur de terminal auquel elle est reliée.

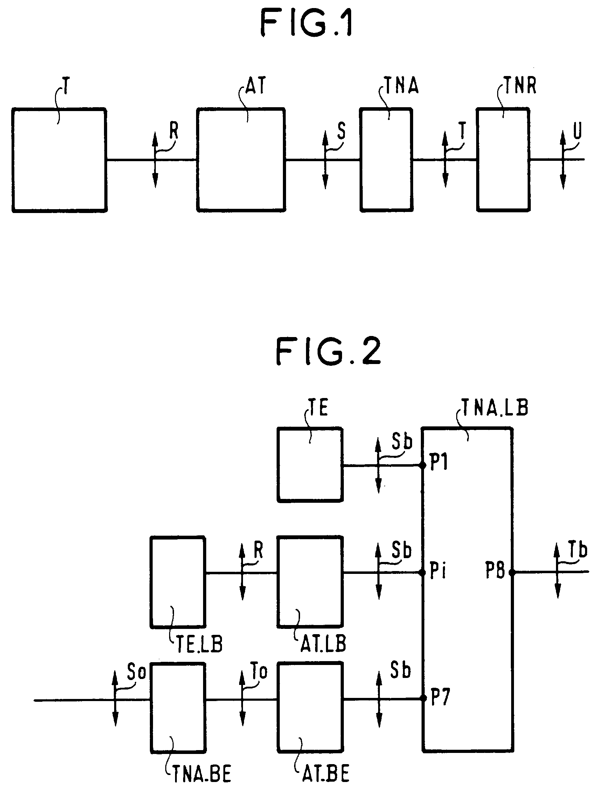

La configuration des installations d'abonné et des interfaces entre les sous-ensembles des installations, telle que recommandée par le CCITT, est représentée figure 1; dans cette figure :
T est un terminal,
AT est un adaptateur de terminal,
TNA est une terminaison numérique d'abonné,
TNR est une terminaison numérique de réseau (terminal de réseau),
R, S, T, U, sont des interfaces.

La présente invention conceme la terminaison numérique d'abonné TNA et les moyens de raccorder ladite terminaison à la terminaison numérique de réseau TNR et aux terminaux.

L'invention va être décrite à l'aide d'exemples non limitatifs de réalisation, illustrés par les figures annexées dans lesquelles :
- la figure 2 représente l'architecture générale d'une installation terminale d'abonné mettant en oeuvre une terminaison numérique d'abonné large bande et les moyens de raccordement de l'invention,
- la figure 3 est un schéma général de la terminaison numérique d'abonné large bande de la figure 2,
- la figure 4 représente un module d'accès de la terminaison numérique d'abonné large bande de la figure 2,
- la figure 5 représente un module horloge d'un module d'accès,
- la figure 6 représente un circuit parallèle-série embrouilleur d'un module d'accès,
- la figure 7 est un circuit utilisé en embrouilleur et en désembrouilleur dans le circuit parallèle-série embrouilleur,
- la figure 8 représente un adaptateur de terminal d'une installation terminale d'abonné, et
- la figure 9 représente un adaptateur de multiplex d'un adaptateur de terminal.

La figure 2 représente l'architecture générale d'une installation terminale d'abonné comportant une terminaison numérique d'abonné large bande TNA.LB, et ses moyens de raccordement, de l'invention. Ces moyens de raccordement sont les interfaces optiques asynchrones Tb, Sb et les adaptateurs de terminaux AT.LB et AT.BE.
- L'interface optique Tb achemine un débit qui peut atteindre 600 Mbit/s ; comme dans la figure 1, cette interface Tb relie un port, P8, de la terminaison TNA.LB à la terminaison numérique de réseau TNR.
- La terminaison numérique d'abonné large bande TNA.LB assure une fonction de commutation afin d'offrir des communications locales entre les terminaux raccordés aux ports P1 à P7 de ladite terminaison par l'intermédiaire d'interfaces Sb ; ces interfaces sont au nombre de sept dans l'exemple considéré ; bien entendu le nombre d'interfaces Sb peut être différent.
- Les interfaces optiques Sb acheminent des débits qui peuvent atteindre 600 Mbit/s.
- Les terminaux large bande, TE, en mode transfert asynchrone (un seul est représenté) sont raccordés directement par une interface Sb, à un port de la terminaison TNA.LB.
- Les terminaux large bande TE.LB, à interface R non compatible avec le mode de transfert asynchrone (un seul terminal TE.LB est représenté), sont raccordés chacun par l'intermédiaire d'un adaptateur large bande AT.LB et une interface Sb, à un port de la terminaison TNA.LB.
- Les terminaux bande étroite sont supposés raccordés par une interface So à une terminaison bande étroite TNA.BE, préalablement existante, et présentant une interface To, (ou T2) ; cette terminaison bande étroite TNA.BE est raccordée, par l'intermédiaire d'un adaptateur bande étroite AT.BE et d'une interface optique Sb, à un port de la terminaison TNA.LB.

L'une des caractéristiques essentielles d'une telle installation terminale d'abonné est que le débit réel aux interfaces Sb et Tb est possible à de multiples débits sans modification des autres fonctionnalités, suivant les besoins réels de l'installation.

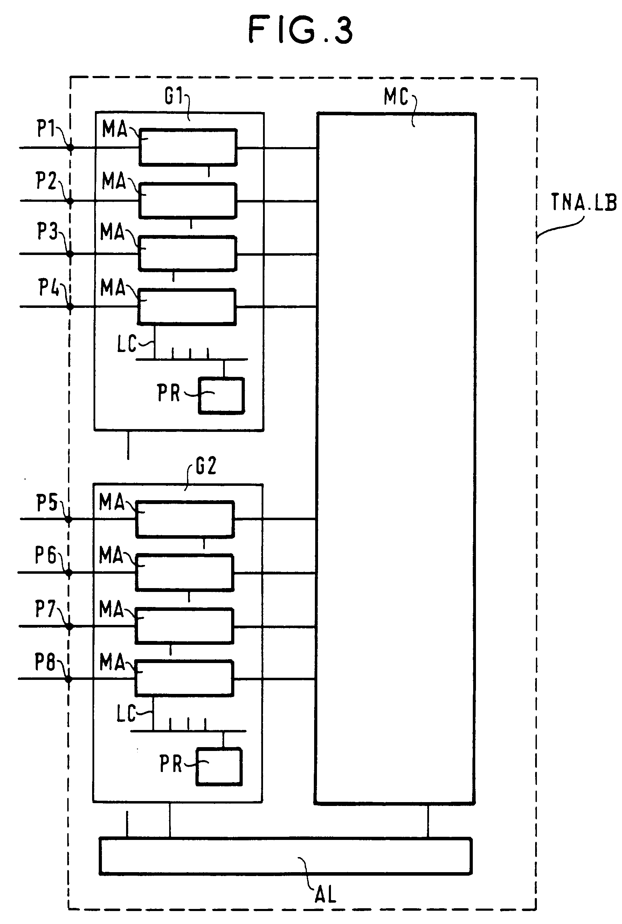

La figure 3 représente le schéma d'une terminaison numérique d'abonné large bande TNA.LB de la figure 2.

La terminaison TNA.LB comprend une matrice de commutation MC, deux groupes d'accès G1 et G2, et une alimentation AL. Chaque groupe d'accès comporte quatre modules d'accès MA reliés chacun par une liaison de contrôle LC à un processeur PR qui joue le rôle de contrôleur local ; l'alimentation AL est reliée à la matrice de commutation MC et aux groupes d'accès. Les ports P1 à P8 de la terminaison sont reliés chacun à un module d'accès. La matrice de commutation MC, de type connu en soi, est, dans cet exemple, du type à 8 entrées et 8 sorties ; chaque module d'accès MA est donc relié à une entrée et à une sortie de la matrice de commutation MC.

Dans chaque groupe d'accès, le processeur PR assure les fonctions de traitement de signalisation et supervision des quatre modules d'accès MA du groupe d'accès.

Les ports P1 à P7 sont reliés chacun à une interface optique, Sb, le port P8 étant relié à l'interface optique Tb, comme représenté figure 2.

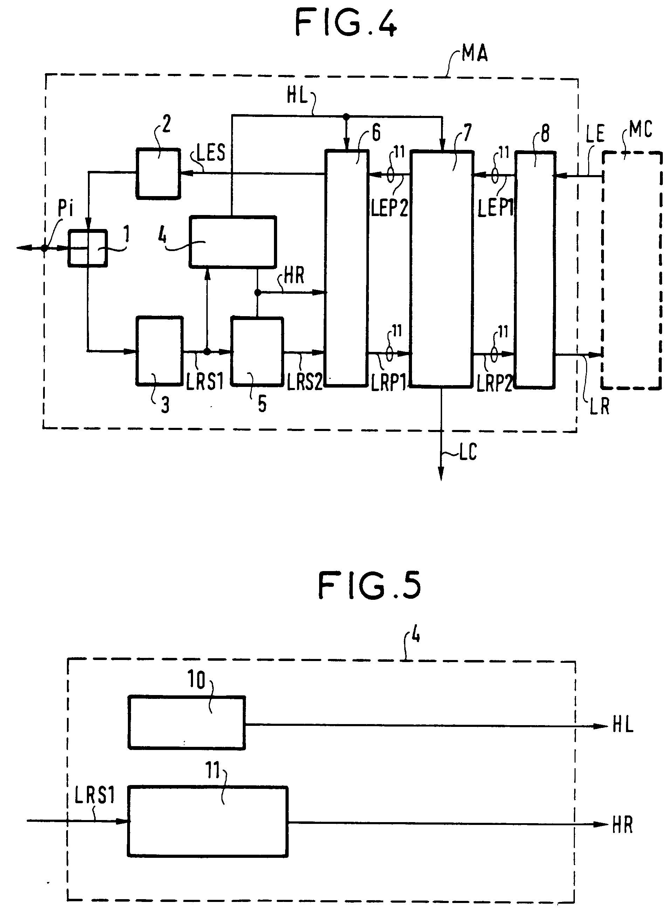

La figure 4 représente le schéma d'un module d'accès MA des groupes d'accès G1 et G2 de la figure 3.

Le port Pi du module d'accès est relié à une interface optique, Sb ou Tb. Les interfaces optiques Sb ou Tb ont comme support une fibre optique monomode, pour les deux sens de transmission, les longueurs d'ondes utilisées étant 1300 nm à la réception et 1500 nm à l'émission ; le débit dans chaque sens est inférieur ou égal à 600 Mbit/s, le signal étant un multiplex de cellules asynchrones, le code utilisé étant le code NRZ embrouillé. Aucune structure périodique n'apparaît au niveau des caractéristiques électriques du signal transporté. En particulier :
- la synchronisation cellule est assurée par la reconnaissance des cellules vides,
- les fonctions liées à l'exploitation des interfaces Sb et Tb mettent en oeuvre des cellules spécifiques à récurrence non nécessairement périodique, c'est-à-dire que le nombre exact de cellules de données ou de cellules vides qui séparent deux cellules d'exploitation de la ligne n'est pas obligatoirement constant. Ceci permet un débit en ligne qui pourrait être quelconque, sans modifier les autres caractéristiques de la ligne.

Le débit en ligne des interfaces optiques peut être quelconque, mais pour tenir compte des problèmes de réalisation, seules quelques valeurs de débit sont retenues, par exemple : 600 Mbit/s pour l'interface Tb et les interfaces Sb avec les terminaux les plus rapides (images à haute définition par exemple), 150 Mbit/s, ce débit couvrant une large gamme de services à des débits intermédiaires, et 10 Mbit/s, ce débit étant accessible directement à toutes les technologies et pouvant être utilisé pour les services bande étroite. Les modules d'accès MA ont donc tous même structure et se différencient uniquement par la fréquence d'un signal d'horloge locale, cette fréquence étant 600 MHz, 150 MHz, ou 10 MHz.

Le port Pi est relié à un duplexeur optique 1, lui-même relié à un émetteur optique 2 et à un récepteur optique 3. L'émetteur optique comporte un laser à 1550 nm, et le récepteur optique comporte une diode PIN. Un module horloge 4 assure la génération d'un signal d'horloge locale HL, au débit des données pour le sens émission (600, 150, ou 10 Mbit/s), et la récupération de rythme à partir des données pour le sens réception, le module horloge étant relié à une liaison de réception série LRS1 en sortie du récepteur optique 3. Un régénérateur 5, pour régénérer en niveau et en temps les données reçues, est relié au récepteur optique par la liaison de réception série LRS1 et au module horloge 4 qui lui délivre un signal d'horloge récupéré HR. Un circuit parallèle-série 6, embrouilleur, est relié à l'émetteur optique 2 par une liaison d'émission série LES, et au régénérateur 5 par une liaison de réception série LRS2 ; il reçoit également du module horloge le signal d'horloge locale HL et le signal d'horloge récupéré HR. Un circuit insertion extraction de cellules 7, pour l'insertion et l'extraction de cellules de signalisation, est relié au circuit parallèle-série embrouilleur 6 par une liaison d'émission parallèle LEP2 et une liaison de réception parallèle LRP1, pour délivrer des données au circuit parallèle-série 6 (sens émission) et en recevoir (sens réception) ; il est également relié par une liaison de contrôle LC, bidirectionnelle, au processeur PR du groupe auquel appartient le module d'accès et au module horloge 4 duquel il reçoit le signal d'horloge locale HL. Un circuit interface 8 est relié au circuit d'insertion extracteur 7 par une liaison d'émission parallèle LEP1 et par une liaison de réception parallèle LRP2 ; il est également relié à la matrice de commutation MC par une ligne d'émission LE et une ligne de réception LR.

Le circuit interface 8 réalise la transposition entre la ligne d'émission LE et la liaison d'émission parallèle LEP1, et entre la liaison de réception parallèle LRP2 et la ligne de réception LR. Selon la technologie utilisée, les liées d'émission LE et de réception LR sont soit du type parallèle, à quatre fils de données à 150 Mbit/s, un fil pour un signal d'horloge à 150 MHz et un fil pour un signal de début de cellule, soit à un seul fil pour un débit série à 600 Mbit/s avec régénération des signaux et récupération de rythme.

Les liaisons d'émission parallèle LEP1 et LEP2, et de réception parallèle LRP1 et LRP2, sont à onze fils chacune : huit fils de données, F1...8 (un pour chaque bit d'un octet), un fil F9 pour un signal d'horloge octet HO au débit de la liaison, un fil F10 pour un signal cellule pleine PC, au niveau 0 pendant toute la durée d'une cellule pleine, et un fil F11 pour un signal début cellule SDC, au niveau 0 au début d'une celulle, c'est-à-dire au premier octet d'une cellule pleine.

Le récepteur optique 3, comporte, outre la diode PIN, un préamplificateur et un amplificateur à contrôle automatique de gain, comme cela est bien connu de l'homme de l'art ; le régénérateur 5 peut également faire partie du récepteur optique.

La figure 5 représente le module horloge 4 de la figure 4 ; ce module comprend un oscillateur 10 et un récupérateur de rythme 11. L'oscillateur délivre le signal d'horloge locale HL, dont la fréquence est de 600, ou 150, ou 10 MHz. Le récupérateur de rythme 11 est relié en entrée, par la liaison de réception série LRS1, au récepteur optique 3, et délivre le signal d'horloge récupéré HR.

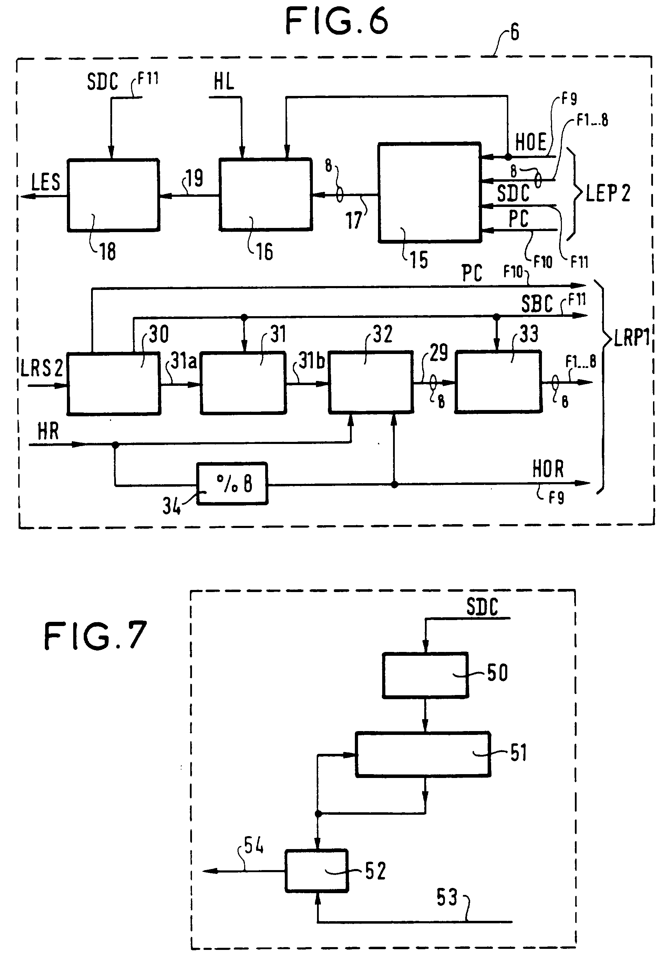

La figure 6 représente le circuit parallèle-série embrouilleur 6 de la figure 4, qui comprend une voie émission et une voie réception. La voie émission est constituée par un circuit de calcul de parité cellule 15, relié en entrée à la liaison d'émission parallèle LEP2, un circuit de mise en série 16 relié par une liaison 17 en sortie du circuit 15 et recevant le signal d'horloge locale HL et un signal d'horloge octet émission HOE par la liaison LEP2, et un circuit d'embrouillage 18 dont l'entrée est reliée en sortie du circuit 16 par une liaison série 19, et la sortie est reliée à liaison émission série LES, ledit circuit 18 étant également relié au fil F11 de la liaison LEP2, duquel il reçoit le signal début de cellule SDC.

La voie réception est constituée par un dispositif de synchronisation 30, pour la recherche et la vérification de la synchronisation, relié en entrée à la liaison de réception série LRS2, un circuit de désembrouillage 31 relié par une liaison 31a en sortie du dispositif de synchronisation 30, un circuit de mise en parallèle 32 relié par une liaison 31b en sortie du circuit de désembrouillage 31, et un circuit de vérification de parité 33 relié en sortie du circuit de mise en parallèle 32 par une liaison parallèle 29 et ayant sa sortie reliée aux huit fils de données F1...8 de la liaison de réception parallèle LRP1. D'autre part le dispositif de synchronisation 30 est relié aux fils cellule pleine F10 et début de cellule F11, de la liaison de réception parallèle LRP1 auxquels il délivre les signaux cellule pleine PC et début de cellule SPC, respectivement. Le circuit de désembrouillage 31 est également relié au fil début de cellule F11. Le circuit de mise en parallèle 32 reçoit le signal d'horloge récupéré HR et un signal d'horloge octet récupéré HOR délivré par un diviseur par huit 34 à partir du signal HR ; la sortie du diviseur est également reliée au fil F9 de la liaison LRP1.

Le dispositif de synchronisation 30 est de tout type connu et en particulier du type décrit dans la demande européenne publiée 0301934, intitulée : Système de commutation temporel de paquets de différentes longueurs.

L'embrouillage ou le désembrouillage est effectué par un dispositif représenté figure 7, et constitué par un circuit de positionnement 50, un générateur de séquence pseudo-aléatoire 51, et un additionneur 52. Le générateur est synchronisé au début de chaque cellule ; pour cela le circuit de positionnement 50 reçoit le signal début de cellule SDC, et délivre un signal de positionnement au générateur qui prend l'état 1111111, au début de chaque cellule ; le générateur a sa sortie rebouclée sur son entrée, et reliée à une entrée de l'additionneur 52, dont une autre entrée est reliée à une liaison 53 par laquelle elle reçoit des informations ; la sortie de l'additionneur est reliée à une liaison 54. Lorsque le dispositif est utilisé comme circuit embrouilleur 18, figure 6, les liaisons 53 et 54 sont respectivement la liaison série 19 et la liaison d'émission en série LES ; lorsque le dispositif est utilisé comme circuit désembrouilleur 31, figure 6, les liaisons 53 et 54 sont respectivement les liaisons 31a et 31b.

L'embrouillage de l'information est réalisé par addition à l'information d'une séquence pseudo-aléatoire délivrée par le générateur 51 du circuit 18 et synchronisée par le signal début de cellule SDC. Cette addition est effectuée dans les conditions suivantes :
- positionnement du générateur au début de chaque cellule,
- pas de modification de l'en-tête de chaque cellule, et
- pas de modification des cellules vides.

Le désembrouillage de l'information est également effectué par addition à l'information embrouillée d'une séquence pseudo-aléatoire délivrée par le générateur 51 du circuit 31 et synchronisée par le signal début de cellule SDC. Cette addition est effectuée dans les mêmes conditions que celles de l'embrouillage.

Le circuit de vérification de parité 33, figure 6, contrôle la parité du nombre de 1 logique de l'ensemble du contenu de la cellule (en-tête et champ d'information). La parité ayant été forcée à l'émission, la détection d'une imparité permet la détection d'une erreur de transmission. Le résultat de ce calcul de parité est transmis au circuit d'insertion-extraction de cellules 7 en vue d'une comptabilisation.

Le circuit d'insertion-extraction de cellules 7 assure les fonctions :
- d'adaptation du débit accès au débit de la matrice de commutation MC,
- de surveillance des lignes d'accès reliées aux ports P1 à P8 qui sont les différents accès de la terminaison numérique d'abonné TNA.LB,
- d'insertion et d'extraction des cellules de signalisation et de contrôle, permettant aux modules d'accès MA, figure 3, de dialoguer soit entre eux, soit avec les éléments auxquels la terminaison numérique d'abonnée est raccordée (adaptateurs et terminaux, ou terminaison de réseau TNR).
On va considérer le fonctionnement du circuit d'insertion extraction de cellules 7, dans le sens réception et dans le sens émission, le sens réception étant, dans un module d'accès MA le sens de transmission des informations reçues par un port Pi et acheminées vers la matrice de commutation MC, et le sens émission étant l'inverse du sens réception.
Sens réception.
- Adaptation du débit de la matrice de commutation MC au débit d'accès (débit au port Pi recevant l'information).

Cette fonction permet à la matrice de commutation MC de fonctionner toujours au même rythme quel que soit le débit à l'accès (port Pi) considéré. En fait le circuit 7 travaille toujours à la plus grande des valeurs de débit (soit le débit à l'accès, soit le débit de la matrice de commutation MC), et une file d'attente en entrée du circuit 7 permet l'adaptation du débit physique à l'accès. Le mode de fonctionnement de cette file d'attente est le suivant :
. elle n'est chargée que par les cellules actives, les cellules vides identifiées à l'aide du signal cellules pleines PC étant éliminées. Le taux de cellules actives, du fait des procédures d'établissement des connections reste compatible avec le débit à l'accès correspondant (interface S ou T),
. elle est écrite au rythme de l'accès,
. elle est lue au rythme de la matrice de commutation MC.

- Surveillance des lignes d'accès.
   Elle consiste à comptabiliser les erreurs bit détectées sur la ligne d'accès. Cette comptabilisation est exploitée par le processeur en charge du module d'accès suivant des modalités diverses qui ne font pas partie de l'invention.
- Insertion et extraction de cellules de signalisation.
   Les cellules transportant la signalisation reçue des lignes d'accès sont extraites et orientées vers le processeur PR associé au module d'accès (processeur du groupe de modules d'accès). Elles sont identifiées grâce à un élément binaire (bit) positionné à 1 à l'initialisation du système pour les numéros de circuit virtuel correspondant à ces cellules, et situé dans un contexte associé à chaque circuit virtuel.
   Les cellules transportant la signalisation vers la matrice de commutation sont insérées à la place d'une cellule vide dans le flux de cellules ; le numéro de circuit virtuel utilisé est un numéro prédéterminé.
   Sens émission.
- Adaptation du débit de la matrice de commutation au débit d'accès (débit du port Pi émettant l'information).

De même que dans le sens réception, cette fonction permet à la matrice de commutation de fonctionner toujours au même rythme quel que soit le débit à l'accès (port Pi) considéré.

Le circuit d'insertion-extraction de cellules 7 travaille également à la plus grande des valeurs de débit (soit le débit à l'accès, soit le débit commuté), et une file d'attente permet l'adaptation du débit physique à l'accès. Le mode de fonctionnement de cette file d'attente est le suivant :
. elle n'est chargée que par les cellules actives, les cellules vides identifiées à l'aide du signal cellule pleine PC étant éliminées. Le taux de cellules actives, du fait des procédures d'établissement des connexions reste compatible avec le débit à l'accès correspondant (interface S ou T),
. elle est écrite au rythme de la matrice de commutation,
. elle est lue au rythme de l'accès correspondant, rythme délivré par le module horloge 4 du module d'accès.

- Surveillance des lignes d'accès.
   Elle consiste en l'envoi d'une redondance dans l'information afin de permettre la mesure en réception de la qualité de la ligne d'accès.
- Insertion et extraction de cellules de signalisation.
   Les cellules transportant la signalisation reçue de la matrice de commutation MC sont extraites et orientées vers le processeur PR associé au module d'accès (processeur du groupe de modules d'accès). Elles sont identifiées grâce à un élément binaire (bit) positionné à 1 à l'initialisation du système pour les numéros de circuit virtuel correspondant à ces cellules, et situé dans un contexte associé à chaque circuit virtuel.
   Les cellules transportant la signalisation vers la ligne d'accès sont insérées à la place d'une cellule vide dans le flux de cellules ; le numéro de circuit virtuel utilisé est un numéro prédéterminé.

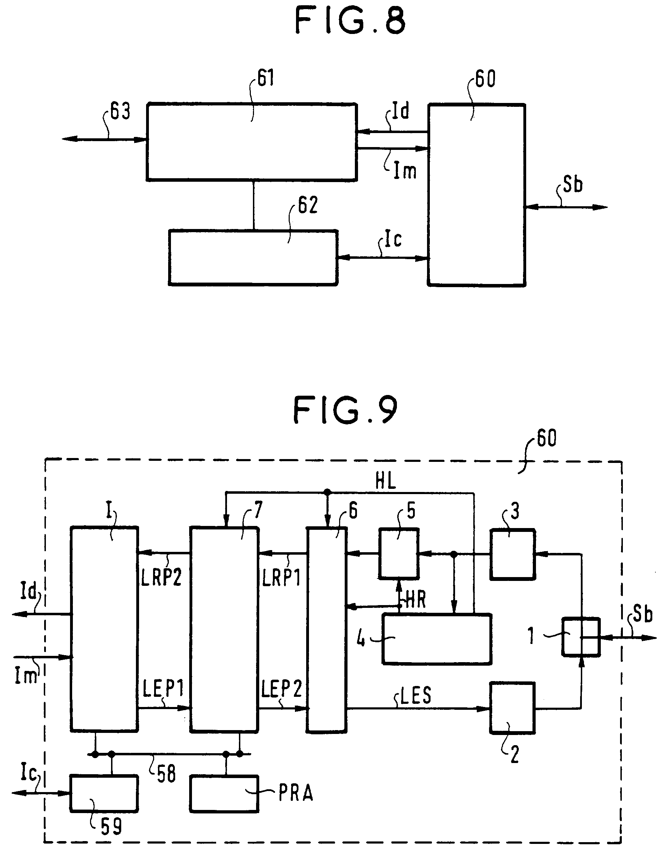

La figure 8 représente le schéma général d'un adaptateur de terminal AT.LB ou AT.BE de la figure 2, constitué par un adaptateur de multiplex 60, un adaptateur de service 61, et un circuit de commande 62 pour la commande de l'adaptateur de service 61.

L'adaptateur de multiplex 60 est relié d'une part à l'interface Sb qui est une interface optique asynchrone acheminant un multiplex asynchrone, et d'autre part à l'adaptateur de service 61 par une interface descendante Id et une interface montante Im ; l'adaptateur 60 est également relié au circuit de commande 62 par une interface de commande Ic. L'adaptateur de service est également relié par une interface 63 à un terminal large bande TE.LB ou à une terminaison bande étroite TNA.BE, selon que l'adaptateur de terminal est à large bande, AT.LB, ou à bande étroite AT.BE.

Les interfaces Id et Im permettent l'échange d'informations organisée en cellules, et l'interface Ic permet l'échange de messages de commande ou de signalisation.

L'interface descendante Id achemine un flux descendant de données organisées en cellules dans le sens adaptateur de multiplex 60 vers adaptateur de service 61 ; elle est constituée de huit fils de données organisées en octets, d'un fil d'horloge octets, et d'un fil de synchronisation cellule.

L'interface montante Im achemine un flux de données organisées en cellules dans le sens adaptateur de service 61 vers l'adaptateur de multiplex 60 ; elle est constituée, comme l'interface descendante Id, par huit fils de données organisées en octets, d'un fil d'horloge octets, et d'un fil de synchronisation cellule.

L'interface de commande Ic achemine les informations de commande et de signalisation échangées, dans les deux sens, entre le circuit de commande 62 et l'adaptateur de multiplex 60 ; elle est constituée par un seul support physique permettant le raccordement en bus de plusieurs terminaisons usagers.

La figure 9 représente l'adaptateur de multiplex 60 de la figure 8. Cet adaptateur de multiplex constitue la partie commune des adaptateurs de terminaux AT.LB et AT.BE, et assure des fonctions indépendantes des services : adaptations aux interfaces Sb, Id et Im, et insertion-extraction de la signalisation. L'adaptateur de multiplex a une structure largement inspirée de celle du module d'accès, représentée figure 4, et comporte donc un duplexeur 1 relié à l'interface S, un émetteur optique 2, un récepteur optique 3, un module horloge 4, un régénérateur 5, un circuit parallèle-série embrouilleur 6, un circuit insertion-extraction de cellules 7, comme le module d'accès ; le circuit interface 8 est remplacé par un circuit interface I relié d'une part aux interfaces Id et Im et d'autre part à la liaison de réception parallèle LRP2 et à la liaison d'émission parallèle LEP1. En outre l'adaptateur de multiplex comporte un processeur PRA relié par une liaison 58 à l'interface I et au circuit d'insertion-extraction de cellules 7, et un circuit interface de commande 59 relié à l'interface Ic et à la liaison 58. Le processeur PRA et le circuit interface 59 constituent une partie commande de l'adaptateur, pour les fonctions de signalisation.

L'adaptateur de service 61 figure 8 réalise la fonction spécifique d'un service ; il y a donc un adaptateur spécifique par service.

Dans le sens émission (sens montant) un adaptateur de service réalise les fonctions de mise en cellules de l'information et de terminaison de signalisation.

Dans le sens réception (sens descendant) un adaptateur réalise les fonctions de récupération de l'information transportée en cellules, de récupération du rythme service, et de terminaison de signalisation.

Les adaptateurs de service sont de différents types, tels que, par exemple :
. émission ou réception d'images,
. transmission de données,
. raccordement d'une installation RNIS bande étroite.

## Revendications

1. Installation terminale d'abonné pour réseau asynchrone dans lequel les informations sont organisées en cellules, comportant:
- une terminaison numérique de réseau (TNR) reliée au réseau asynchrone ;
- une terminaison numérique d'abonné (TNA) reliée par une interface optique asynchrone bidirectionnelle (Tb) à la terminaison de réseau (TNR);
- des terminaux reliés directement à ladite terminaison numérique d'abonné (TNA);
- et des terminaux reliés chacun à ladite terminaison numérique d'abonné (TNA) par un adaptateur de terminal (AT);
caractérisé par le fait que la terminaison numérique d'abonné (TNA) comprend :
- une matrice de commutation (MC) ;
- une pluralité de modules d'accès (MA) à cette matrice (MC), ayant la même structure mais fonctionnant à des fréquences d'horloge différentes ; chaque module d'accès ayant un premier port (LE, LR) relié à la matrice de commutation, et ayant un second port (Pi) ; l'un des modules d'accès ayant un second port (Pi) relié à la terminaison numérique de réseau (TNR) par l'interface optique asynchrone (Tb) bidirectionnelle, les autres modules d'accès ayant chacun un second port (Pi) relié à un terminal (TE) ou à un adaptateur de terminal (AT.LB, AT.BE), par une interface optique asynchrone bidirectionnelle (Sb) ; chaque module d'accès comportant des moyens (7) pour adapter le débit de la matrice de commutation (MC) au débit des informations sur son second port (Pi) ;
- au moins un processeur (PR) relié aux modules d'accès (MA);
et par le fait que chaque interface optique asynchrone (Sb, Tb) reliée à un module d'accès a un débit fonction de la terminaison numérique de réseau, ou du terminal, ou de l'adaptateur de terminal auquel elle est reliée.

2. Installation terminale d'abonné selon la revendication 1, caractérisée par le fait que les modules d'accès (MA) constituent deux groupes d'accès (G1 ; G2), et que chaque groupe d'accès comporte un processeur (PR) relié aux modules d'accès (MA) du groupe.

3. Installation terminale d'abonné selon la revendication 1, caractérisée par le fait que chaque module d'accès comprend :
. un duplexeur optique (1) relié à une interface optique asynchrone,
. un émetteur optique (2) et un récepteur optique (3) reliés au duplexeur (1),
. un module horloge (4) relié en sortie du récepteur optique (3),
. un régénérateur (5) relié en sortie du récepteur optique (3) et au module horloge (4) duquel il reçoit un signal d'horloge récupérée (HR),
. un circuit parallèle-série embrouilleur (6) relié à l'émetteur optique (2) par une liaison d'émission série (LES), au récepteur optique (3) par une liaison de réception série (LRS2) et au module horloge (4) duquel il reçoit un signal d'horloge locale (HL) pour émettre des informations et un signal d'horloge récupérée pour recevoir des informations,
. un circuit insertion-extraction de cellules (7) relié au circuit parallèle-série embrouilleur (6) par une deuxième liaison d'émission parallèle (LEP2) et une première liaison de réception parallèle (LRP1), et
. un circuit interface (8) relié d'une part au circuit insertion-extraction de cellules (7) par une première liaison d'émission parallèle (LEP1) et une deuxième liaison de réception parallèle (LRP2) et d'autre part à la matrice de commutation (MC) par une ligne d'émission (LE) et une ligne de réception (LR).

4. Installation terminale d'abonné selon la revendication 1, caractérisée par le fait qu'un adaptateur de terminal (AT) est constitué par un adaptateur de multiplex (60) relié par une interface optique asynchrone à un module d'accès (MA), un adaptateur de service (61) relié d'une part à l'adaptateur de multiplex (60) par une interface montante (Im) et une interface descendante (Id) et d'autre part à un terminal, et un circuit de commande (62) relié à l'adaptateur de multiplex (60) par une interface de commande(Ic) et à l'adaptateur de service, ledit adaptateur de service (61) étant spécifique d'un service, l'adaptateur de multiplex étant identique dans chaque adaptateur de terminal.

5. Installation terminale d'abonné selon la revendication 4, caractérisée par le fait que l'adaptateur de multiplex (60) comprend :
. un duplexeur optique (1) relié à l'interface optique asynchrone,
. un émetteur optique (2) et un récepteur optique (3) reliés au duplexeur (1),
. un module horloge (4) relié en sortie du récepteur optique (3),
. un régénérateur (5) relié en sortie du récepteur optique (3) et au module horloge (4) duquel il reçoit un signal d'horloge récupérée (HR),
. un circuit parallèle-série embrouilleur (6) relié à l'émetteur optique (2) par une liaison d'émission série (LES), au récepteur optique (3) par une liaison de réception série (LRS2) et au module horloge (4) duquel il reçoit un signal d'horloge locale (HL) pour émettre des informations et un signal d'horloge récupérée (HR) pour recevoir des informations,
. un circuit insertion-extraction de cellules (7) relié au circuit parallèle-série embrouilleur (6) par une deuxième liaison d'émission parallèle (LEP2) et une première liaison de réception parallèle (LRP1), et au module horloge duquel il reçoit un signal d'horloge locale (HL),
. un circuit interface (I) relié d'une part au circuit insertion-extraction de cellules (7) par une première liaison d'émission parallèle (LEP1) et une deuxième liaison de réception parallèle (LRP2) et d'autre part à l'adaptateur de service (61) par lesdites interfaces montante (Im) et descendante (Id),
. un processeur (PRA) relié par une liaison (58) au circuit interface (I) et au circuit d'insertion et d'extraction de cellules (7), et
. un circuit interface de commande (59) relié à ladite liaison (58) et à l'interface de commande (Ic).

## Patentansprüche

1. Teilnehmer-Anschlußeinrichtung für ein asynchrones Netz, in dem die Informationen in Zellen organisiert sind,
- mit einem digitalen Netzanschluß (TNR), der an das asynchrone Netz angeschlossen ist,
- mit einem digitalen Teilnehmeranschluß (TNA), der über eine asynchrone bidirektionale optische Schnittstelle (Tb) mit dem Netzanschluß (TNR) verbunden ist,
- mit direkt mit dem digitalen Teilnehmeranschluß (TNA) verbundenen Endgeräten,
- und mit Endgeräten, die je an den digitalen Teilnehmeranschluß (TNA) über ein Endgeräte-Anpassungsorgan (AT) angeschlossen sind,
dadurch gekennzeichnet, daß der digitale Teilnehmeranschluß (TNA) aufweist:
- eine Schaltmatrix (MC),
- mehrere Zugangsmoduln (MA) zu dieser Matrix (MC), wobei die Struktur dieser Moduln einander gleicht, aber der Betrieb bei unterschiedlichen Taktfrequenzen abläuft, wobei jeder Zugangsmodul einen ersten Port (LE, LR) besitzt, der an die Schaltmatrix angeschlossen ist, und einen zweiten Port (Pi), wobei einer der Zugangsmoduln mit einem zweiten Port (Pi) an den digitalen Netzanschluß (TNR) über die bidirektionale asynchrone optische Schnittstelle (Tb) angeschlossen ist, während die anderen Zugangsmoduln je mit einem zweiten Port (Pi) an ein Endgerät (TE) oder ein Endgeräte-Anpassungsorgan (AT.LB, AT.BE) über eine bidirektionale asynchrone optische Schnittstelle (Sb) angeschlossen sind und wobei jeder Zugangsmodul Mittel (7) aufweist, um den Durchsatz der Schaltmatrix (MC) an den Informationsdurchsatz auf dem zweiten Port (Pi) anzupassen,
- mindestens einen an die Zugangsmoduln (MA) angeschlossenen Prozessor (PR),
und daß jede asynchrone optische Schnittstelle (Sb, Tb), die an einen Zugangsmodul angeschlossen ist, einen Durchsatz besitzt, der vom digitalen Netzanschluß oder dem Endgerät oder dem Endgeräte-Anpassungsorgan anhängt, an das sie angeschlossen ist.

2. Teilnehmer-Anschlußeinrichtung nach Anspruch 1, dadurch gekennzeichnet, daß die Zugangsmoduln (MA) zwei Gruppen von Zugängen (G1, G2) bilden und daß jede Gruppe von Zugängen einen Prozessor (PR) besitzt, der an die Zugangsmoduln (MA) der Gruppe angeschlossen ist.

3. Teilnehmer-Anschlußeinrichtung nach Anspruch 1, dadurch gekennzeichnet, daß jeder Zugangsmodul aufweist:
. einen optischen Duplexer (1), der an eine asynchrone optische Schnittstelle angeschlossen ist,
. einen optischen Sender (2) und einen optischen Empfänger (3), die an den Duplexer (1) angeschlossen sind,
. einen Taktmodul (4), der an den Ausgang des optischen Empfängers (3) angeschlossen ist,
. einen Regenerator (5); der an den Ausgang des optischen Empfängers (3) und an den Taktmodul (4) angeschlossen ist, von dem er ein wiedergewonnenes Taktsignal (HR) empfängt,
. eine Parallel-Serienschaltung (6), auch Verschlüssler genannt, die an den optischen Sender (2) über eine Serien-Sendeverbindung (LES), an den optischen Empfänger (3) über eine Serien-Empfangsverbindung (LRS2) und an den Taktmodul (4) angeschlossen ist, von dem sie ein örtliches Taktsignal (HL) zum Aussenden der Informationen und ein wiedergewonnenes Taktsignal zum Empfang der Informationen empfängt,
. eine Schaltung (7) zum Einfügen und Entnehmen von Zellen, die an die Parallel-Serienschaltung (6) über eine zweite parallele Sendeverbindung (LEP2) und eine erste parallele Empfangsverbindung (LRP1) angeschlossen ist,
. und eine Schnittstellenschaltung (8), die einerseits an die Schaltung (7) zum Einfügen und Entnehmen von Zellen über eine erste parallele Sendeverbindung (LEP1) und eine zweite parallele Empfangsverbindung (LRP2) und andererseits an die Schaltmatrix (NC) über eine Sendeleitung (LE) und eine Empfangsleitung (LR) angeschlossen ist.

4. Teilnehmer-Anschlußeinrichtung nach Anspruch 1, dadurch gekennzeichnet, daß ein Endgeräte-Anpassungsorgan (AT) aus einem Multiplex-Anpassungsorgan (60), das über eine asynchrone optische Schnittstelle an einen Zugangsmodul (MA) angeschlossen ist, aus einem Dienstanpassungsorgan (61), das einerseits an das Multiplex-Anpassungsorgan (60) über eine ansteigende Schnittstelle (Im) und eine absteigende Schnittstelle (Id) und andererseits an ein Endgerät angeschlossen ist, und aus einer Steuerschaltung (62) besteht, die an das Multiplex-Anpassungsorgan (60) über eine Steuerschnittstelle (Ic) und an das Dienstanpassungsorgan angeschlossen ist, wobei das Dienstanpassungsorgan (61) für eine Dienstleistung spezifisch ist, während das Multiplex-Anpassungsorgan in jedem Endgeräte-Anpassungsorgan dasselbe ist.

5. Teilnehmer-Anschlußeinrichtung nach Anspruch 4, dadurch gekennzeichnet, daß das Multiplex-Anpassungsorgan (60) aufweist:
. einen optischen Duplexer (1), der an die asynchrone optische Schnittstelle angeschlossen ist,
. einen optischen Sender (2) und einen optischen Empfänger (3), die an den Duplexer (1) angeschlossen sind,
. einen Taktmodul (4), der an den Ausgang des optischen Empfängers (3) angeschlossen ist,
. einen Regenerator (5), der an den Ausgang des optischen Empfängers (3) und an den Taktmodul (4) angeschlossen ist, von dem er ein wiedergewonnenes Taktsignal (HR) empfängt,
. eine Parallel-Serienschaltung (6), auch Verschlüssler genannt, die an den optischen Sender (2) über eine Serien-Sendeverbindung (LES), an den optischen Empfänger (3) über eine Serien-Empfangsverbindung (LRS2) und an den Taktmodul (4) angeschlossen ist, von dem sie ein örtliches Taktsignal (HL) zum Aussenden der Informationen und ein wiedergewonnenes Taktsignal (HR) zum Empfang der Informationen empfängt,
. eine Schaltung (7) zum Einfügen und Entnehmen von Zellen, die an die Parallel-Serienschaltung (6) über eine zweite parallele Sendeverbindung (LEP2) und eine erste parallele Empfangsverbindung (LRP1) sowie an den Taktmodul angeschlossen ist, von dem sie ein örtliches Taktsignal (HL) empfängt
. eine Schnittstellenschaltung (I), die einerseits an die Schaltung (7) zum Einfügen und Entnehmen von Zellen über eine erste parallele Sendeverbindung (LEP1) und eine zweite parallele Empfangsverbindung (LRP2) und andererseits an das Dienstanpassungsorgan (61) über die ansteigende und absteigende Schnittstelle (Im, Id) angeschlossen ist,
. einen Prozessor (PRA), der über eine Verbindung (58) an die Schnittstellenschaltung (I) und an die Schaltung (7) zur Einfügung und Entnahme von Zellen angeschlossen ist,
. und eine Steuerschnittstellenschaltung (59), die an die Verbindung (58) und an die Steuerschnittstelle (Ic) angeschlossen ist.

## Claims

1. A subscriber terminal installation for an asynchronous network in which information is organized in cells, the installation comprising:
a network digital termination (NT1) connected to the asynchronous network;
a subscriber digital termination (NT2) connected via a two-way asynchronous optical interface (Tb) to the network termination (NT1);
terminals connected directly to said subscriber digital termination (NT2);
and terminals connected to said subscriber digital termination (NT2) via terminal adapters (TA);
the installation being characterized by the fact that the subscriber digital termination (NT2) comprises:
a switching matrix (MC);
a plurality of access modules (MA) to said matrix (MC), having the same structure but operating at different clock frequencies; each access module having a first port (LE, LR) connected to the switching matrix and having a second port (Pi); one of the access modules having a second port (Pi) connected to the network digital termination (NT1) via the two-way asynchronous optical interface (Tb), and each of the other access modules having a second port (Pi) connected via a two-way asynchronous optical interface (Sb) to one of the following: a terminal (THE) and a terminal adapter (B.TA, N.TA); each access module including means (7) for adapting the rate of the switching matrix (MC) to the rate of information at its second port (Pi); and
at least one processor (PR) connected to the access modules (MA); and
by the fact that each asynchronous optical interface (Sb, Tb) connected to an access module has a data rate which is a function of which one of the following it is connected to: a network digital termination, a terminal, and a terminal adapter.

2. A subscriber terminal installation according to claim 1, characterized by the fact that the access modules (MA) comprise two groups of accesses (G1; G2), and that each group of accesses includes its own processor (PR) connected to the access modules (MA) of the group.

3. A subscriber terminal installation according to claim 1, characterized by the fact that each access module comprises:
an optical duplexer (1) connected to an asynchronous optical interface;
an optical transmitter (2) and an optical receiver (3) connected to the duplexer (1);
a clock module (4) connected to the output of the optical receiver (3);
a regenerator (5) connected to the output of the optical receiver (3) and to the clock module (4) from which it receives a recovered clock signal (HR);
a parallel-serial scrambler circuit (6) connected to the optical transmitter (2) via a serial transmit link (LES), to the optical receiver (3) via a serial receive link (LRS2), and to the clock module (4) from which it receives a local clock signal (HL) for transmitting information and a recovered clock signal for receiving information;
a cell insert and extract circuit (7) connected to the parallel-serial scrambler circuit (6) via a second parallel transmit link (LEP2) and a first parallel receive link (LRP1); and
an interface circuit (8) connected firstly to the cell insert and extract circuit (7) via a first parallel transmit link (LEP1) and a second parallel receive link (LRP2), and secondly to the switching matrix (MC) via a transmit link (LE) and a receive line (LR).

4. A subscriber terminal installation according to claim 1, characterized by the fact that a terminal adapter (TA) is constituted by a multiplex adapter (60) connected via an asynchronous optical interface to an access module (MA), a service adapter (61) connected firstly to the multiplexer adapter (60) via an up interface (Im) and a down interface (Id), and secondly to a terminal, and a control circuit (62) connected to the multiplex adapter (60) via a control interface (Ic) and to the service adapter, said service adapter (61) being specific to a service, the multiplex adapter being the same in each terminal adapter.

5. A subscriber terminal installation according to claim 4, characterized by the fact that the multiplex adapter (60) comprises:
an optical duplexer (1) connected to an asynchronous optical interface;
an optical transmitter (2) and an optical receiver (3) connected to the duplexer (1);
a clock module (4) connected to the output of the optical receiver (3);
a regenerator (5) connected to the output of the optical receiver (3) and to the clock module (4) from which it receives a recovered clock signal (HR);
a parallel-serial scrambler circuit (6) connected to the optical transmitter (2) via a serial transmit link (LES), to the optical receiver (3) via a serial receive link (LRS2), and to the clock module (4) from which it receives a local clock signal (HL) for transmitting information and a recovered clock signal (HR) for receiving information;
a cell insert and extract circuit (7) connected to the parallel-serial scrambler circuit (6) via a second parallel transmit link (LEP2) and a first parallel receive link (LRP1), and to the clock module from which it receives a local clock signal (HL);
an interface circuit (I) connected firstly to the cell insert and extract circuit (7) via a first parallel transmit link (LEP1) and a second parallel receive link (LRP2), and secondly to the service adapter (61) via said up and down interfaces (Im, Id);
a processor (PRA) connected via a link (58) to the interface circuit (I) and to the cell insert and extract circuit (7); and
a control interface circuit (59) connected to said link (58) and to the control interface (Ic).
